Europäisches Patentamt

European Patent Office

Office européen des brevets

(19)

(11) Numéro de publication : **0 491 623 A1**

# (12) DEMANDE DE BREVET EUROPEEN

(21) Numéro de dépôt : **91403431.9**

(22) Date de dépôt : **17.12.91**

(51) Int. Cl.$^5$ : **A23C 21/06,** A23C 9/156, A23C 9/146

(30) Priorité : **18.12.90 FR 9015845**

(43) Date de publication de la demande :
**24.06.92 Bulletin 92/26**

(84) Etats contractants désignés :
**BE DE ES GB IT NL**

(71) Demandeur : **SOCIETE EURIAL**
**Parc Club du Perray, 3 rue de la rainière B.P. 538**
**F-44077 Nantes Cédex 03 (FR)**

(72) Inventeur : **Maugas, Jean-Jacques**
**6 rue Beaumanoir**
**F-35000 Rennes (FR)**
Inventeur : **Le Magnen, Christine**
**2 rue Saint Guillaume**
**F-35000 Rennes (FR)**

(74) Mandataire : **Peaucelle, Chantal et al**
**Cabinet Armengaud Aine 3, avenue Bugeaud**
**F-75116 Paris (FR)**

(54) **Boisson lactée et procédé pour sa préparation.**

(57) L'invention concerne un produit lacté, de pH de 2,4 à 3,9 comprenant en mélange une fraction acide de lait et une fraction non acide, utilisable pour l'élaboration d'une boisson laitière acide avec incorporation d'ingrédients capables de lui conférer un goût agréable, en particulier des ingrédients à base de fruits.

EP 0 491 623 A1

L'invention concerne une boisson lactée, plus spécialement une boisson laitière renfermant des ingrédients à base de fruits ou autres éléments conférant un goût agréable pour le consommateur.

Dans les populations des pays industrialisés, la consommation de lait liquide reste relativement réduite par rapport à celle de boissons aromatisées, particulièrement de jus de fruits et formulations dérivées de ces jus de fruits.

Le lait est souvent consommé au petit déjeuner ou pendant des repas, rarement comme boisson rafraîchissante.

Tout spécialement, les enfants préfèrent se désaltérer au cours de la journée avec des boissons aromatisées et plus spécialement avec des jus de fruits ou des dérivés, plutôt que d'absorber du lait liquide.

Or ces boissons présentent souvent un mauvais équilibre nutritionnel lié à une charge saccharidique importante et à une carence en protéines.

On conçoit donc l'intérêt de disposer d'une boisson possédant les qualités nutritionnelles élevées des protéines du lait, tout en satisfaisant le goût du consommateur pour les boissons aromatisées ou à base de jus de fruits.

De nombreux travaux ont été réalisés dans le but de préparer des mélanges contenant une matière première d'origine laitière et des extraits de fruits.

Cependant, les jus de fruits ont en règle générale des pH acides et, lors de l'ajout de ces jus dans du lait, on constate une diminution du pH de 6,6 (+/- 0,1) à une valeur proche du point isoélectrique des caséines, ce qui entraîne la formation de précipités ou de caillés.

Pour remédier à ce phénomène, il est nécessaire d'acidifier le lait avant l'ajout d'ingrédients, de manière à maintenir les caséines en solution à un pH inférieur à 4,6 (généralement inférieur ou égal à 4,00).

Ainsi, selon le brevet US 4 061 792, on prépare une boisson laitière acide contenant du jus de raisin en acidifiant au préalable le lait par ajout d'acides organiques alimentaires.

D'autres auteurs utilisent soit du lait acidifié par des acides organiques soit du lait fermenté par des microorganismes (brevet GB 1,317,384).

Il est également possible de réaliser des boissons moins acides avec une valeur de pH pouvant atteindre 4.5. Dans ce cas les ingrédients utilisés sont déminéralisés par échange d'ions (brevet US 4 676 988).

Ce procédé intéressant s'avère néanmoins onéreux car il nécessite la mise en oeuvre de deux étapes chromatographiques : cationique puis anionique.

De plus il conduit à un produit très appauvri en éléments minéraux indispensables.

Dans le brevet US 4 352 828, on rapporte l'obtention de lait acidulé dont les cations ont été pratiquement éliminés par échange avec des résines cationiques. Il est prévu d'utiliser ce lait acidulé pour préparer des laits acidifiés, de la caséine de lait, des crèmes de lait acides et du lactosérum. Ce brevet est toutefois plus spécialement axé sur l'obtention de produits précipités à partir du lait et ne fournit pas d'indications sur la réalisation d'une boisson satisfaisant le goût du consommateur pour les jus de fruits, boissons chocolatées, caramélisées ou autres.

En étudiant diverses fractions de lait, les inventeurs ont constaté qu'il est possible de réaliser un mélange constituant une base laitière appropriée pour l'élaboration de boissons telles qu'évoquées ci-dessus.

L'invention a donc pour but de fournir un produit lacté dont les qualités organoleptiques le rendent particulièrement approprié pour l'élaboration d'une boisson alimentaire contenant des ingrédients à base de fruits ou autres additifs appréciés par les consommateurs.

Le produit lacté selon l'invention est caractérisé en ce qu'il comprend en mélange une fraction de lait dite fraction soluble dépourvue des protéines susceptibles de précipiter à un pHi de 4 à 5 environ, ayant un pH d'environ 1,8 à 2,8 et du lait non traité ou une fraction de lait non acidifiée contenant lesdites protéines précipitables à un pHi de 4 à 5 environ, de telle sorte que le pH du mélange soit d'environ 2,4 à 3,9 de préférence d'environ 2,7 à 3,3.

Par le terme lait, on désigne dans la description et les revendications aussi bien du lait de soja que du lait de mammifères, plus spécialement du lait de vache, de chèvre, de brebis, de chamelle. L'expression lait non traité signifie que le lait n'a pas subi de traitement chimique ou enzymatique notamment d'acidification.

La fraction soluble du lait, qui comprend les protéines solubles aux pH considérés est plus spécialement formée soit par un lactosérum acide ou doux, soit par un perméat d'ultrafiltration de lait ou de lactosérum, soit par un perméat de microfiltration de lait ou de lactosérum, cette phase présentant un pH d'environ 1,8 à 2,8.

On rappelle que le terme lactosérum, dans son acception générale, désigne le produit récupéré après traitement du lait par des enzymes et/ou des microorganismes (lactosérum doux), ou après coagulation du lait à l'aide d'un acide (lactosérum acide).

Les perméats d'ultrafiltration et ceux de microfiltration constituant la fraction soluble utilisée selon l'invention sont obtenus selon les techniques classiques, en utilisant des membranes dont le seuil de coupure permet de retenir les caséines et laissent passer les protéines sériques.

Selon une disposition avantageuse de l'invention, la fraction soluble de lait est telle qu'obtenue par chromatographie d'échange d'ions à l'aide d'un échangeur cationique. On utilise un échangeur de type alimentaire, c'est-à-dire répondant aux normes requises en alimentation. Il s'agit plus spécialement d'un échangeur cationique fort du type de ceux à groupes sulfoniques.

Le lait non traité, ou la fraction de lait non acidifiée, utilisé pour former la base laitière selon l'invention présente un pH de 6 à 8 environ. Sa teneur en lipides est avantageusement inférieure à 5 % environ par rapport au poids de matière sèche. Il s'agit notamment de lait écrémé, d'un rétentat d'ultrafiltration de lait écrémé ou d'un rétentat de microfiltration de lait écrémé, ou de caséinates remis en solution.

Les caséinates utilisés peuvent être des caséinates de cations alcalins et/ou alcalino-terreux. A titre d'exemple, on citera les caséinates de sodium et/ou de calcium et/ou de potassium et/ou de magnésium.

Les solutions de caséinates sont reconstituées dans de l'eau, avantageusement à une concentration d'environ 1 à 10 % en volume.

Les rétentats correspondent à des laits ultrafiltrés avec un facteur de concentration volumique de l'ordre de 1,2 à 4 ou à des laits microfiltrés avec un facteur de concentration volumique de 1,2 à 5 environ.

En vue de son utilisation pour l'élaboration d'une boisson, cette base laitière est avantageusement sucrée.

Le sucre est choisi plus spécialement parmi le saccharose, le fructose, le glucose ou un mélange de saccharides, ou encore un mélange sucrant formé de saccharides à faible indice de dextrose équivalent et d'édulcorant.

Dans une formulation allégée, le mélange sucrant est constitué de saccharides ayant un indice dextrose équivalent proche de celui du saccharose et d'édulcorant tel que l'aspartame.

La base laitière définie ci-dessus, formée d'un mélange d'une fraction acidifiée de lait et d'une fraction non acidifiée est utilisable pour élaborer une boisson alimentaire. A cet effet, on incorpore un ou plusieurs ingrédients capables de lui conférer des caractéristiques organoleptiques agréables pour le consommateur.

Il peut s'agir par exemple de chocolat, de cacao, de caramel, de café, de cola ou tout autre additif dont le goût est recherché par le consommateur, en particulier par les enfants, étant entendu que le ou les ingrédients ajoutés ne doivent pas provoquer de précipitation des protéines ni conférer un goût astringent.

Plus spécialement, l'invention vise une boisson laitière caractérisée en ce qu'elle renferme en mélange une base laitière telle que définie ci-dessus et des ingrédients à base de fruits, le pH résultant étant de 2,4 à 3,9 environ.

Par ingrédients à base de fruits, on entend, notamment, les jus de fruits, les concentrés de fruits, les purées de fruits, les arômes naturels de fruits, les nectars de fruits.

Les ingrédients à base de fruits sont obtenus entre autres à partir d'orange, de citron, d'ananas, de fruits exotiques, de cola, de fruits rouges comme fraise, framboise, mûre, myrtille, de pomme, de raisin.

La quantité d'ingrédients à base de fruits incorporée à la base laitière est comprise entre 0.01 % et 20 % en poids.

Avantageusement les boissons laitières de l'invention comprennent des éléments additionnels, présentant une valeur nutritionnelle, tels que des oligo-éléments ou des vitamines. A titre d'exemples de vitamines, on citera, le β carotène, l'apocaroténal, la canthaxanthine ou la riboflavine.

Les vitamines sont incorporées à des concentrations comprises entre 0.001 % et 0.05 % en poids environ.

Conformément à l'invention, le produit lacté évoqué ci-dessus est obtenu par acidification d'une fraction soluble de lait et mélange avec du lait non traité ou une fraction de lait non acidifiée, selon des proportions telles que le pH résultant soit d'environ 2,4 à 3,9, de préférence d'environ 2,7 à 3,3.

Le lait non traité, ou la fraction de lait non acidifiée ont avantageusement un pH de 6 à 8 environ. Leur teneur en lipides est inférieure à 5 % environ par rapport au poids de matières sèches.

L'acidification de la fraction soluble est avantageusement réalisée par chromatographie par échange d'ions de la phase soluble du lait en utilisant un échangeur cationique faible ou fort, notamment de type à groupes sulfoniques, conforme aux normes requises en alimentation.

Comme échangeurs de ce type, on citera :
   – DOWEX R 88 ou XUS R (DOW CHEMICAL)
   – DUOLITE R C 20 (DIAMOND SHAMROCK)
   – AMBERLITE R IR 120 (Rohm et HAAS).

L'acidification est avantageusement réalisée à une température d'environ 0 à 40° C, préférentiellement de 4 à 10 °C.

Dans un système fonctionnant en batch, la phase soluble est mise en contact avec l'échangeur de cations pendant 1 à 15 minutes, de manière à atteindre une valeur de pH comprise entre 1,8 et 2,8.

Dans un système en fonctionnement continu, la fraction phase soluble est percolée à travers un lit de résine placé dans une colonne.

Le débit d'alimentation détermine le temps de contact nécessaire entre l'échangeur cationique et le liquide percolé pour obtenir une valeur de pH à la sortie de la colonne d'environ 1,8 et 2,8.

Le rapport phase soluble / résine dépend de la composition de la fraction phase soluble.

Pour un perméat d'ultrafiltration de lait ou de lactosérum, ce rapport est compris entre 10/1 et 35/1.

Pour un lactosérum ou un perméat de microfiltration de lait ou de lactosérum, ce rapport est compris entre 5/1 et 25/1.

Contrairement au traitement du lait par un échangeur de cations, il n'y a dans ce procédé aucune précaution à prendre en matière de contrôle de chute de pH, les protéines de cette fraction étant parfaitement solubles à tous les pH.

Après saturation de l'échangeur par les cations de la phase soluble, la résine est régénérée par une solution d'acide, puis rincée par de l'eau désionnisée. Elle est alors directement disponible pour recommencer un autre cycle d'acidification.

La phase soluble acidifiée séparée de la résine est stockée dans un récipient muni d'un agitateur.

Le stockage est effectué à une température comprise entre 0 et 25° C.

La phase soluble du lait utilisée est telle que définie ci-dessus. Le lactosérum ou les perméats utilisés sont préparés directement à partir de lait ou de lactosérum ou à partir de poudres reconstituées dans de l'eau. Le lait est utilisé frais ou reconstitué à partir d'une poudre de lait.

Pour obtenir une fraction utilisable comme base laitière en vue de l'élaboration d'une boisson, on incorpore à la fraction acide soluble ci-dessus une deuxième fraction. Cette deuxième fraction est avantageusement telle que définie ci-dessus en rapport avec la boisson laitière de l'invention. Les rétentats de lait utilisés sont obtenus directement à partir de lait écrémé ou à partir de poudres de rétentat remises en solution dans de l'eau.

La quantité de fraction de lait non acidifié ou de lait non traité mélangée à une fraction soluble acide est variable et dépend de sa composition.

Le mélange est effectué sous agitation à une température d'environ 0 à 25° C.

Lorsque le pH désiré est atteint, une quantité de sucre comprise entre 2,5 et 12 % environ en poids est incorporée à la base laitière acide toujours sous agitation.

Le sucre utilisé est tel qu'indiqué plus haut. Le sucre ou le mélange sucrant est incorporé dans la base laitière acide sous forme solide ou liquide.

La base laitière acide sucrée ainsi obtenue est stable et peut être conservée à une température comprise entre 0 et 20°C.

La base laitière acide sucrée est pasteurisée à une température de l'ordre de 55 à 80°C, pendant 10 à 120 secondes environ.

La base laitière acide sucrée peut également être stérilisée en appliquant un traitement thermique de l'ordre de 90 à 140° C pendant environ 2 à 80 secondes.

L'incorporation à cette base laitière d'ingrédients tels qu'indiqués plus haut, notamment à base de fruits conduit à l'obtention d'une boisson dont les caractéristiques organoleptiques sont particulièrement appréciées du consommateur.

Les ingrédients à base de fruits sont incorporés à la base laitière acide sucrée avant ou après le traitement thermique. Comme indiqué ci-dessus, on ajoute si on le désire, des vitamines ou des oligo-éléments à la boisson pour augmenter ses qualités nutritionnelles.

On reporte ci-après, des exemples de préparation de boissons lactées afin d'illustrer l'invention.

Exemples :

**Exemple 1 :**

6090 g de lait écrémé sont ultrafiltrés sur un module équipé d'une membrane AMICON PM 3000 [R]

Le facteur de concentration est de 3. On obtient 4050 g de perméat et 2040 g de rétentat.

3000 g de perméat sont mis en contact avec 179 g de résine DOWEX [R] 88 à la température de 16° C.

Le rapport perméat / résine est de 16,7/1.

Le pH du perméat chute de 6,63 à 2,3 en 4 minutes.

Le perméat acidifié est séparé de l'échangeur de cations sur un verre fritté.

95 g de rétentat sont incorporés sous agitation dans 1000 g de perméat acide.

Le pH de la solution est alors de 3,39.

90 g de saccharose en poudre sont ajoutés à la solution acide.

La base laitière acide sucrée est chauffée à 80° C pendant 2 minutes.

1.9 g d'arôme naturel d'orange et 0.023 g de $\beta$ carotène sont additionnés à la solution.

**Exemple 2 :**

3 litres de lactosérum de caséinerie présure sont mis en contact avec 180 g de résine DOWEX <sup>R</sup> 88 soit un rapport lactosérum/résine de 16,6/1.

Le pH chute en 5 minutes de 6,72 à 2,4.

La séparation est effectuée comme dans l'exemple 1.

20 g de lait écrémé UHT sont ajoutés dans 150 g de lactosérum décationisé.

11,9 g de saccharose en poudre sont dissous dans la solution.

Le pH de la solution est de 2,99.

17 g de concentré d'orange sont incorporés dans la base laitière acide. La boisson est pasteurisée à 75° C pendant 30 secondes.

0,01 g de β carotène sont additionnés après pasteurisation.

**Exemple 3 :**

200 g de la base laitière acide décrite dans l'exemple 2 subissent un traitement thermique de 95° C pendant 1 minute.

20 g de jus concentré de fraise sont incorporés dans la solution.

Le pH est de 3,15.

0,01 g de canthaxanthine sont additionnés au mélange.

**Exemple 4 :**

9060 g de lactosérum de caséinerie présure sont mis en contact avec 370 g de résine échangeuse de cations Amberlite IR 120 <sup>R</sup> (ROHM et HAAS).

Le pH de la solution chute de 6,68 à 2,36 en 14 minutes. La séparation résine / lactosérum acide est réalisée comme dans l'exemple 1.

L'analyse chimique du lactosérum avant et après échange d'ions est la suivante :

|  | Lactosérum de départ | Lactosérum acide |
|---|---|---|
| EST * (g/kg) | 66,65 | 59,50 |
| MAT ** (g/kg) | 10,85 | 9,09 |
| NPN *** (g/kg) | 2,26 | 1,73 |
| Matières minérales (g/kg) | 5,00 | 1,25 |
| Protéines (g/kg) | 8,59 | 7,36 |
| Conductivité (µS/cm) | 6520 | 9530 |
| pH | 6,4 | 2,1 |
| Calcium (g/kg) | 1,3 | 0,05 |
| Magnésium (g/kg) | 0,078 | 0,012 |
| Sodium (g/kg) | 0,5 | 0,004 |
| Potassium (g/kg) | 1,66 | 0,004 |

\* extrait sec total

\*\* matière azotée totale

\*\*\* azote non protéique

450 g de lait écrémé pH 6,63 et 280 g de saccharose en poudre sont incorporés dans 3800 g de lactosérum acide.

Le pH de la base laitière est de 2,63.

4 échantillons de 1000 g de cette solution sont préparés avec :

1 - 0,12 g de $\beta$ carotène et 15 g d'arôme naturel d'orange

2 - 0,03 g de $\beta$ carotène et 5 g d'arôme naturel d'ananas

3 - 6 g d'arôme naturel de cola

4 - 10 g d'arôme naturel de fruits exotiques.

Les quatre échantillons subissent un traitement thermique de 85° C pendant 2 minutes.

**Exemple 5 :**

1000 g de lactosérum acide préparé selon l'exemple 2 sont mélangés avec 120 ml de lait écrémé pH 6,6 et 78 g de saccharose.

La composition de cette base est :

| | |
|---|---|
| EST (g/kg) | : 123,7 |
| MAT (g/kg) | : 11,8 |
| M Minérales (g/kg) | : 2,85 |
| Caséines (g/kg) | : 3,6 |
| Protéines (g/kg) | : 8,9 |

0,006 g de canthaxanthine et 18 g de concentré de fruits exotiques sont additionnés à cette base laitière et la solution subit une pasteurisation de 75° C pendant 2 minutes.

**Revendications**

1/ Produit lacté, caractérisé en ce qu'il comprend en mélange une fraction de lait dite fraction soluble dépourvue des protéines susceptibles de précipiter à un pHi de 4 à 5 environ, ayant un pH d'environ 1,8 à 2,8 et du lait non traité ou une fraction de lait non acidifiée contenant lesdites protéines précipitables à un pHi de 4 à 5 environ, de telle sorte que le pH du mélange soit d'environ 2,4 à 3,9 de préférence d'environ 2,7 à 3,3.

2/ Produit lacté selon la revendication 1, caractérisé en ce que la fraction soluble de lait est formée soit par un lactosérum acide ou doux, soit un perméat d'ultrafiltration de lait ou de lactosérum, soit un perméat de microfiltration de lait ou de lactosérum, cette phase présentant un pH d'environ 1,8 à 2,8.

3/ Produit lacté selon la revendication 1 ou 2, caractérisé en ce que la fraction soluble est telle qu'obtenue par chromatographie d'échange d'ions à l'aide d'un échangeur cationique en particulier un échangeur du type de ceux sous forme sulfonique, répondant aux normes requises en alimentation.

4/ Produit lacté selon l'une quelconque des revendications 1 à 3, caractérisé en ce que le lait non traité ou la fraction lait non acidifiée présente un pH de 6 à 8 environ et est formé par du lait écrémé, un rétentat d'ultrafiltration de lait écrémé ou un rétentat de microfiltration de lait écrémé ou de caséinates remis en solution.

5/ Produit lacté selon la revendication 4, caractérisé en ce que le lait non traité ou la fraction de lait non acidifié présente une teneur en lipides inférieure à 5 % environ par rapport au poids de matière sèche.

6/ Produit lacté selon l'une quelconque des revendications précédentes, caractérisé en ce qu'il contient du sucre, le sucre utilisé étant choisi avantageusement parmi le saccharose, le fructose, le glucose ou un mélange de saccharides ou encore un mélange sucrant formé de saccharides à faible indice de dextrose équivalent et d'édulcorant.

7/ Utilisation d'un produit lacté selon l'une quelconque des revendications 1 à 6 pour l'élaboration d'une boisson.

8/ Boisson lactée, caractérisée en ce qu'elle comprend un produit lacté selon l'une quelconque des revendications 1 à 6 en mélange avec un ou plusieurs ingrédients capables de lui conférer une saveur agréable, sous réserve que ce ou ces ingrédients ne provoquent pas de précipitation des protéines de la boisson et ne confèrent pas de goût astringent, des ingrédients appropriés étant choisis notamment parmi le chocolat, le cacao, la caramel, le café, le cola ou étant à base de fruits et qu'elle est additionnée le cas échéant de produits à valeur nutritionnelle tels que vitamines ou oligo-éléments.

9/ Boisson lactée, caractérisée en ce qu'elle comprend un produit lacté selon l'une quelconque des revendications 1 à 6, en mélange avec des ingrédients à base de fruits.

10/ Procédé de préparation d'un produit lacté selon la revendication 1 en ce qu'il comprend l'acidification d'une fraction soluble de lait et son mélange avec du lait non traité ou une fraction non acidifiée, selon des proportions telles que le pH résultant soit d'environ 2,4 à 3,9 de préférence d'environ 2,7 à 3,3, l'étape d'acidification étant avantageusement réalisée par chromatographie par échange d'ions de la phase soluble du lait en utilisant un échangeur cationique de type alimentaire.

Office européen
des brevets

# RAPPORT DE RECHERCHE EUROPEENNE

Numero de la demande

EP 91 40 3431

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 029 937 (MEGGLE MILCHINDUSTRIE) * Revendications 1-4,7,8; exemples 1,3,4; page 2, ligne 35 - page 3, ligne 10 * --- | 1-5,7, 10 | A 23 C 21/06 A 23 C 9/156 A 23 C 9/146 |
| Y | EP-A-0 299 937 --- | 6,8,9 | |
| X | GB-A-1 362 502 (J. MEGGLE) * Page 1, ligne 48 - page 2, ligne 10; exemple 3 * --- | 1-4,10 | |
| Y | EP-A-0 109 868 (LAITERIES E. BRIDEL) * Revendication 1; exemple 2 * --- | 6,8 | |
| Y | EP-A-0 165 105 (LAITERIES E. BRIDEL) * Exemple 1; page 3, ligne 28 - page 4, ligne 11 * --- | 6,8,9 | |
| A | FR-A-1 479 361 (CH. GERVAIS) * Résumé points 1,2c,f,g * --- | 1,2 | DOMAINES TECHNIQUES RECHERCHES (Int. Cl.5) |
| A | EP-A-0 091 369 (LAITERIES H. TRIBALLAT) * Revendication 1; exemples * ----- | 1 | A 23 C |

Le présent rapport a été établi pour toutes les revendications

| Lieu de la recherche | Date d'achèvement de la recherche | Examinateur |
|---|---|---|
| LA HAYE | 25-03-1992 | DESMEDT G.R.A. |

CATEGORIE DES DOCUMENTS CITES

X : particulièrement pertinent à lui seul
Y : particulièrement pertinent en combinaison avec un autre document de la même catégorie
A : arrière-plan techuologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)